# EUROPÄISCHE PATENTANMELDUNG

(11) **EP 4 649 802 A1**
(43) Veröffentlichungstag der Anmeldung: **19.11.2025**
(21) Anmeldenummer: 25167618.5
(22) Anmeldetag: 01.04.2025
(51) Int. Cl.: A01B 79/00, A01D 41/127, B60K 35/28

(54) **FAHRREGLER FÜR EINE SELBSTFAHRENDE ERNTEMASCHINE**

(30) Priorität: 13.05.2024 DE 102024113248
(71) Anmelder: CLAAS Selbstfahrende Erntemaschinen GmbH, 33428 Harsewinkel (DE)
(72) Erfinder: Neitemeier, Dennis, 59510 Lippetal (DE); Belau, Sven Carsten, 33332 Gütersloh (DE); Bönig Dr., Ingo, 33330 Gütersloh (DE); Brune, Markus, 33428 Harsewinkel (DE); Klein Helmkamp, Marwin, Osnabrück (DE); Dirksen, Matthis, Warendorf (DE); Thiesmann, Waldemar, 49080 Osnabrück (DE); Bormann, Bastian, 33334 Gütersloh (DE); Titkemeier, Daniel, Osnabrück (DE)
(74) Vertreter: CLAAS Gruppe

(57) **Zusammenfassung**

Ein Fahrregler für eine selbstfahrende Erntemaschine (2) zum Verarbeiten von von einem abzuerntenden Feld aufgenommenem Erntegut umfasst einen Stängeldickesensor (17a) und eine Recheneinheit (16), die eingerichtet ist, einen Sollwert der Fahrgeschwindigkeit (v) der Erntemaschine (2) anhand eines erwarteten Durchsatzes (q) an Erntegut vorzugeben, den die Recheneinheit (16) anhand einer gemessenen Stängeldicke des Ernteguts abschätzt.

## Beschreibung

Die vorliegende Erfindung betrifft einen Fahrregler für eine selbstfahrende Erntemaschine gemäß dem Oberbegriff von Anspruch 1.

Die Erntemaschine, die insbesondere von einem Mähdrescher oder einem Feldhäcksler gebildet sein kann, umfasst einen Fahrantrieb zur Bewegung der Erntemaschine mit einer Fahrgeschwindigkeit über ein Feld. Der Fahrantrieb kann beispielsweise eine Verbrennungskraftmaschine sowie ein Fahrgetriebe umfassen. Der Fahrantrieb dient in aller Regel zum Antrieb von Rundreifen und/oder Raupenlaufwerken, mittels derer die Erntemaschine auf einem Untergrund bewegt wird.

Die Erntemaschine umfasst ferner einen Erntevorsatz zum Abschneiden von auf dem Feld befindlichen Erntegut. Der Erntevorsatz kann insbesondere einen Mähbalken umfassen, der bei bestimmungsgemäßem Betrieb der Erntemaschine in geringem Abstand über dem Boden geführt wird und die das Erntegut bildenden Pflanzen knapp oberhalb des Bodens abschneidet. Das abgeschnittene Erntegut wird sodann typischerweise in Richtung einer mittigen Übergabeöffnung des Erntevorsatzes bewegt und dort an einen nachgeschalteten Einzugskanal übergeben. Mittels des Einzugskanals wird das Erntegut an nachgeschaltete Arbeitsorgane der Erntemaschine übergeben. Beim Mähdrescher kann dies insbesondere eine Drescheinrichtung, beim Feldhäcksler insbesondere eine Häckseleinrichtung sein.

Diese Arbeitsorgane können blockieren, wenn der von ihnen zu verarbeitende Erntegutstrom zu stark wird. Vor allem wenn die Erntemaschine nahe an ihrer Leistungsgrenze betrieben wird, kann eine geringe Zunahme des Erntegutstroms dazu führen, dass die Arbeitsorgane langsamer laufen, so dass sich noch mehr Erntegut vor den Arbeitsorganen aufstaut und diese schließlich steckenbleiben. Wenn dies geschieht, muss der Betrieb der Erntemaschine unterbrochen werden, um das blockierende Erntegut zu beseitigen, was die Effizienz des Ernteprozesses empfindlich beeinträchtigt und insbesondere ein schwerwiegendes Hindernis für den Einsatz autonom navigierender Erntemaschinen darstellen kann.

Eine Möglichkeit, der Blockade entgegenzuwirken, ist, den Strom des von der Erntemaschine aufgenommenen Ernteguts durch Herabsetzen ihrer Fahrgeschwindigkeit zu verringern.

Ein solcher Ansatz ist z.B. in DE 10 2013 209 197 A1 beschrieben. Dort wird eine automatische Regelung der Fahrgeschwindigkeit eines Mähdreschers offenbart, für die ein aktueller Erntegutdurchsatz in dem Mähdrescher sowie ein zu erwarteter Erntegutdurchsatz berücksichtigt werden, wobei letzterer mittels einer berührungslosen Erfassung im Vorfeld des Mähdreschers ermittelt wird. Die berührungslose Erfassung erfolgt mittels einer Kamera, einem Radarsensor oder einem Lasersensor. Die Erfassung durch Radar ist kostspielig. Die optische Erfassung ist kostengünstiger, aber empfindlich gegen Sichtbehinderung, etwa durch Nebel oder Staub. Allgemein ist die indirekte Abschätzung des zu erwartenden Massenstroms durch die berührungslose Erfassung mit Unsicherheiten behaftet; um daraus resultierende Schätzfehler tolerieren zu können, muss die Erntemaschine mit einer ausreichenden Leistungsreserve betrieben werden; d.h. die verfügbare Antriebsleistung kann nur unvollständig genutzt werden.

Gebräuchlicher sind daher Techniken, die auf einer Messung des Massenstroms des Ernteguts im Innern der Erntemaschine, an der Dresch- oder Häckseleinrichtung basieren. Bei Mähdrescher wird im Einzugskanal der Volumenstrom mithilfe einer sich auslenkenden Walze, die über die Gutmatte läuft, gemessen. Beim Feldhäcksler wird die Auslenkung der Vorpresswalzen gemessen. Diese Techniken ermöglichen aber nur eine Anpassung an langsame Änderungen des Massenstroms. Wenn die Dichte eines abzuerntenden Bestands plötzlich zunimmt, kann ein solcher Schwall an Erntegut in den Erntevorsatz gelangen, dass er, wenn er die inneren Arbeitsorgane der Maschine erreicht, dort zu einer Blockade führt, ohne dass rechtzeitig gegengesteuert werden kann. Dieses Problem wird immer gravierender, je breiter die in der Praxis verwendeten Erntevorsätze werden, da mit der Breite auch die Menge an Erntegut zunimmt, das bereits in der Maschine aufgenommen ist, bevor ein Gegensteuern möglich ist.

Aus EP 2 859 787 A1 ist ein Stängeldickensensor bekannt, der in einem Verfahren zum Betreiben eines Maispflückers eingesetzt wird, um die Breite eines Pflückspalts zu regeln, in dem die Kolben von durchlaufenden, zuvor von dem Sensor vermessenen Maisstängeln abgestreift werden, und so Erntegutverluste zu minimieren.

DE 11 2014 000 914 T5 beschreibt an einem Erntevorsatz angebrachte Stängeldickensensoren, die zum Abschätzen einer Kornmasse oder einer Masse ohne Korn des Ernteguts dienen.

Aufgabe der Erfindung ist, einen Fahrregler für eine selbstfahrende Erntemaschine zu schaffen, der die Wahrscheinlichkeit einer Überlastung durch eine plötzliche Zunahme des Erntegutstroms zuverlässig und mit geringen Kosten mindert.

Die Aufgabe wird gelöst, indem bei einem Fahrregler für eine selbstfahrende Erntemaschine zum Verarbeiten von von einem abzuerntenden Feld aufgenommenem Erntegut mit einer Recheneinheit, die einen Sollwert der Fahrgeschwindigkeit der Erntemaschine anhand eines erwarteten Durchsatzes an Erntegut vorzugibt, die Recheneinheit eingerichtet ist, den erwarteten Durchsatz anhand einer gemessenen Stängeldicke des Ernteguts abzuschätzen. Bei bekannter Art oder Sorte des Ernteguts kann anhand der Stängeldicke die Masse des aus ihr gewonnenen und von den internen Arbeitsorganen der Erntemaschine zu verarbeitenden Ernteguts mit guter Präzision abgeschätzt werden. Die Messung kann auf haptischem Wege und somit kostengünstig bei geringer Anfälligkeit für Störeinflüsse und Messfehler erfolgen.

Um eine Messung der Stängeldicke in einer bekannten Höhe zu ermöglichen, sollte die Messung erfolgen, solange dieser noch steht oder unmittelbar nachdem er geschnitten worden ist. Ein hierfür verwendeter Stängeldickesensor ist daher vorzugsweise zur Anbringung an einem Erntevorsatz der selbstfahrenden Erntemaschine, idealerweise in unmittelbarer Nähe zu dessen Schneidkante, ausgelegt.

Einer bevorzugten Ausgestaltung zufolge umfasst der Stängeldickesensor wenigstens einen Tastbügel, der einen von Stängeln des Ernteguts durchlaufenen Kanal des Erntevorsatzes auslenkbar begrenzt, wobei die Auslenkung des Tastbügels durch einen den Kanal durchlaufenden Stängel repräsentativ für dessen Dicke ist.

Der Kanal kann auf einer Seite durch eine Transportscheibe, insbesondere durch wenigstens ein Zinkenrad der Transportscheibe, begrenzt sein, das einen zu messenden Stängel am Sensor vorbeibefördert. Dies ist insbesondere zweckmäßig, wenn die Erntemaschine ein Feldhäcksler ist.

Der Kanal kann beiderseits durch Tastbügel begrenzt sein, um einer Verfälschung der Dickenmessung durch eine eventuelle Auslenkung des Stängels quer zum Kanal, etwa aufgrund unvollständiger Trennung vom Boden oder von Druck durch benachbarte Stängel, entgegenzuwirken. Die Summe der Auslenkungen beider Bügel liefert einen präzisen Aufschluss über die Stängeldicke auch bei eventuellem seitlichem Versatz.

Der wenigstens eine Tastbügel sollte eine in Bezug auf eine normale Durchlaufrichtung der Stängel stromaufwärtige Flanke aufweisen, entlang derer der Kanal in der Durchlaufrichtung allmählich enger wird. Indem der Stängel beim Durchlaufen des Kanals den Tastbügel auf einem quer zum Kanal orientierten Weg allmählich zurückdrängt, kann ein langsam veränderlicher Wert der Auslenkung erhalten werden, dessen Maximum exakt abgetastet werden kann, um daraus die Stängeldicke abzuleiten.

Spiegelbildlich zu der stromaufwärtigen Flanke kann der wenigstens eine Tastbügel eine stromabwärtige Flanke aufweisen, entlang derer der Kanal in der Durchlaufrichtung allmählich breiter wird. Diese stromabwärtige Flanke sollte unter einem Winkel zur normalen Durchlaufrichtung verlaufen, der klein genug ist, um eine Auslenkung des Tastbügels durch einen entgegen der Durchlaufrichtung passierenden Stängel zu ermöglichen. So falls nötig der Erntevorsatz reversiert werden, um bereits aufgenommenes Erntegut wieder auszustoßen, ohne dass Rücksicht auf den Sensor genommen werden muss.

Wenn, insbesondere in dem Fall, dass die Erntemaschine ein Mähdrescher ist, der Erntevorsatz eine Pflückwalze aufweist, kann wenigstens ein Teil dieser Pflückwalze dem Stängeldickesensor bezogen auf die normale Durchlaufrichtung vorgelagert sein. Indem die Pflückwalze in üblicher Weise den Stängel nach unten zieht, um im Zusammenwirken mit dem Spalt begrenzenden Pflückplatten Kolben vom Stängel abzustreifen, sorgt sie gleichzeitig für eine reproduzierbare, typischerweise vertikale Ausrichtung des Stängels, so dass aus einer Schiefstellung resultierende Fehler bei der Messung der Stängeldicke vermieden werden.

Die Stängeldickesensoren können zu mehreren über die Breite des Erntevorsatzes verteilt angeordnet sein. Insbesondere wenn der Erntevorsatz aus mehreren klappbar verbundenen Segmenten besteht, sollte jedes Segment wenigstens einen Stängeldickesensor aufweisen. Idealerweise kann jeder Bestandsreihe ein Sensor zugeordnet sein, so dass die Dicke jedes einzelnen vom Erntevorsatz aufgenommenen Stängels gemessen werden kann.

Je breiter der Erntevorsatz ist, umso länger ist die Zeit, die nah an den Enden des Erntevorsatzes geschnittenes Erntegut im Erntevorsatz auf dem Weg zu dessen Übergabeöffnung zubringt. Um den von den internen Arbeitsorganen der Erntemaschine zu bewältigenden Durchsatz korrekt abzuschätzen, sollte die Recheneinheit Ausgabesignale der mehreren Stängeldickesensoren gegeneinander zeitversetzt berücksichtigen.

Für eine korrekte Einschätzung des Durchsatzes oder der Gesamterntemenge ist es notwendig, nicht nur die Stängeldicke der einzelnen aufgenommenen Pflanzen zu kennen, sondern auch den Zeitabstand zwischen nacheinander aufgenommenen Stängeln bzw. die Zahl der pro Zeiteinheit oder im Laufe eines Ernteeinsatzes aufgenommenen Stängel. Um beiden Anforderungen zu genügen, ist der Stängeldickesensor vorzugsweise eingerichtet, ein zeitaufgelöstes Messsignal an die Recheneinheit zu liefern, das es der Recheneinheit erlaubt, eine Häufigkeit zu ermitteln, mit der Stängel den Stängeldickesensor passieren, und die Häufigkeit bei der Abschätzung des Durchsatzes zu berücksichtigen.

Stängelförmige Erntegüter werden in einem definierten Abstand gelegt. Aus diesem Abstand und einer maximalen Fahrtgeschwindigkeit der Erntemaschine ergibt sich ein minimaler Zeitabstand zwischen Stängeln, die den Stängeldickesensor passieren und die in dessen Ausgangssignal zeitlich aufgelöst sein müssen, um eine korrekte Mengenermittlung zu ermöglichen. Die aufsummierte Zahl der Auslenkungen entspricht der Stängelanzahl; indem jede Auslenkung in geeigneter Weise mit der gemessenen Stängeldichte gewichtet wird, kann die Erntemenge ermittelt werden. Idealerweise ist die Zeitauflösung hoch genug, um auch eng benachbarte, aus doppelt gelegten Körnern entstandene Stängel getrennt zu erfassen.

Gegenstand der Erfindung ist ferner eine Erntemaschine, insbesondere ein Mähdrescher oder Feldhäcksler, mit einem Fahrregler wie oben beschrieben, und ein computerlesbares Medium, auf dem Anweisungen gespeichert sind, die, wenn sie von einem Computer ausgeführt werden, den Computer veranlassen, als Recheneinheit eines Fahrreglers wie oben beschrieben zu arbeiten.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Seitenansicht einer Pflückvorrichtung als Beispiel für einen Erntevorsatz, an einer Erntemaschine in einer exemplarischen Anwendungssituation;
- Fig. 2: eine schematische Draufsicht auf einen Pflückspalt der Pflückvorrichtung aus Fig. 1;
- Fig. 3: eine Detailansicht einer Baueinheit des Stängeldickesensors;
- Fig. 4: eine Ansicht eines Maisgebisses von vorn; und
- Fig. 5: eine Detailansicht eines zweiten Maisgebisses .

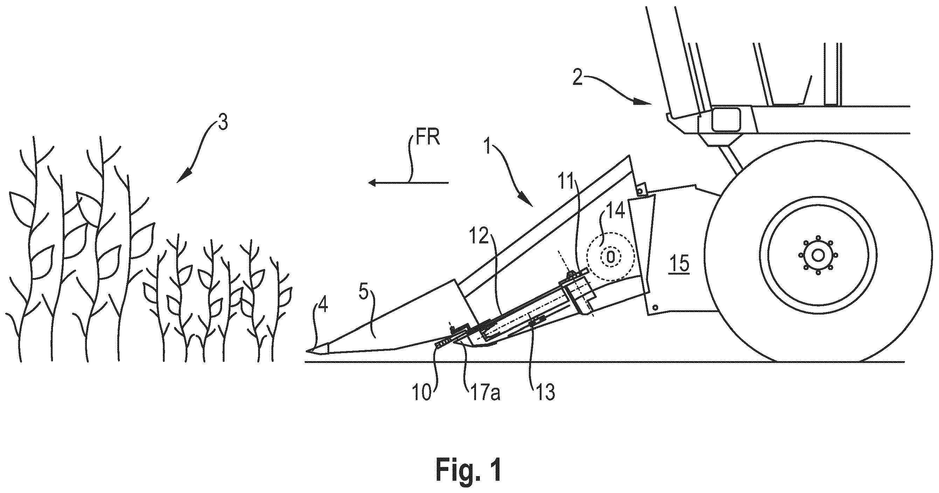

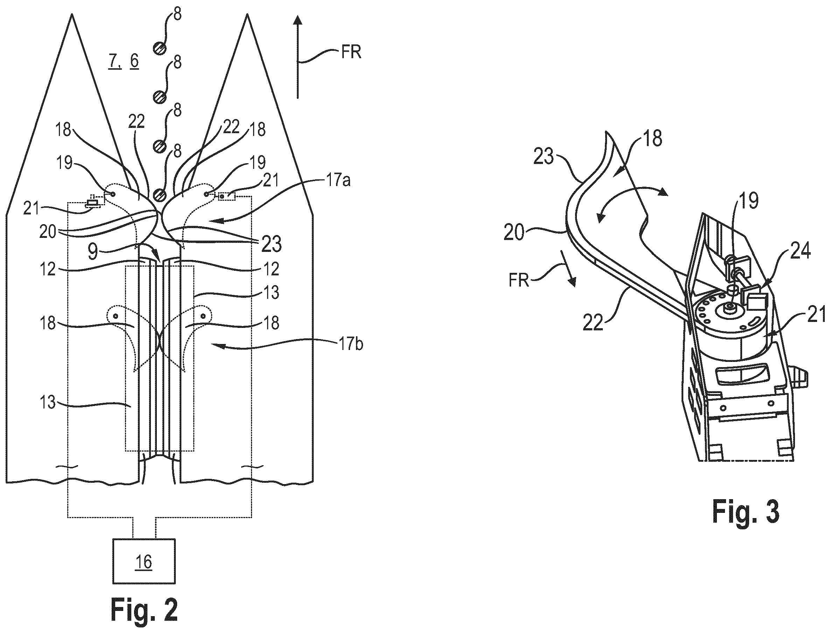

Fig. 1 zeigt einen Erntevorsatz, hier eine Pflückvorrichtung 1 zum Ernten von Halmfrüchten, die in ihrem rückwärtigen Bereich an einer selbstfahrenden Erntemaschine, hier einem Mähdrescher 2 montiert ist. Die Pflückvorrichtung 1 erfasst gleichzeitig mehrere Reihen von stängeligem Erntegut 3. Entlang einer Vorderkante der Pflückvorrichtung 1 ist eine Reihe von sich jeweils von einer vorderen Spitze 4 aus nach hinten ähnlich einem halben Kegel verbreiternde Führungshauben 5 angeordnet. Die Führungshauben 5 sind vorgesehen, um wie in Fig. 2 gezeigt zwischen zwei Reihen des Ernteguts 3 einzugreifen und jeweils paarweise einen sich nach hinten verengenden vorderen Abschnitt 6 eines Kanals 7 zu bilden, der eine Reihe von Stängeln 8 des Ernteguts 3 einem einen hinteren Abschnitt des Kanals 7 bildenden Pflückspalt 9 zuführt. Rotierende Messer am Ende des vorderen Abschnitts 6 sind in fachüblicher Weise vorgesehen, um die Stängel 8 bodennah zu kappen; um die gekappten Stängel entlang des Pflückspalts 9 zu fördern, sind beiderseits des Pflückspalts Förderketten zwischen vorderen und hinteren Umlenkrollen 10, 11 aufgespannt, die von entgegengesetzten Seiten her in den Pflückspalt 9 eingreifende, die Stängel vorwärtsschiebende Finger tragen.

Auf einem Großteil seiner Länge ist der Pflückspalt 9 begrenzt durch einander zugewandte Kanten von Pflückplatten 12. Unter den Pflückplatten 12 angeordnete Pflückwalzen 13 sind um in Längsrichtung des Pflückspalts 9 orientierte Achsen gegensinnig drehangetrieben, um die durch den Pflückspalt 9 in dessen Längsrichtung geförderten Stängel 8 einzuklemmen und abwärts zu ziehen, so dass an den Stängeln 8 hängende Früchte abgestreift und ins Innere der Pflückvorrichtung 1 weiter gefördert werden. Dort ist eine Förderschnecke 14 um eine quer zur normalen Fahrtrichtung FR des Mähdreschers 2 orientierte Achse drehangetrieben, um die Früchte zu einer mittigen Übergabeöffnung der Pflückvorrichtung 1 zu transportieren und dort an einen Einzugskanal 15 des Mähdreschers 2 zu übergeben.

Der Massenstrom des Ernteguts, das über den Einzugskanal 15 ein (nicht dargestelltes) Dreschwerk des Mähdreschers 2 erreicht, ist einerseits bestimmt durch die Zahl der pro Zeiteinheit geschnittenen Stängel 8 des Ernteguts 3 und damit durch die Fahrgeschwindigkeit des Mähdreschers 2 in Vorwärtsrichtung FR, andererseits durch die Menge der von jedem Stängel 8 gewonnenen Früchte. Diese kann auf einem Feld lokal variieren. Figur 1 zeigt den Mähdrescher 2 beim Fahren durch einen Bestand von Pflanzen, die aufgrund schlechter Bodenbedingungen klein geblieben sind und wenige oder kleine Früchte und dementsprechend dünne Stängel 8 aufweisen. Um in einem solchen Bestand das Dreschwerk effizient auszulasten, muss eine Recheneinheit 16 (s. Fig. 2) eine hohe Soll-Fahrgeschwindigkeit des Mähdreschers in der Vorwärtsrichtung FR vorgeben.

Wenn der Mähdrescher 2 mit dieser Soll-Fahrgeschwindigkeit durch einen darauffolgenden Bestand fährt, in dem bessere Bedingungen geherrscht haben und die Pflanzen kräftigere Stängel 8 haben und mehr Frucht tragen, dann ist damit zu rechnen, dass der Massenstrom am Dreschwerk dessen Auslastungsgrenze überschreiten wird und es zu einer Verstopfung kommen wird. Es ist daher wichtig, bei Erreichen des kräftigeren Bestandes die Fahrgeschwindigkeit des Mähdreschers 2 rechtzeitig und stark genug herunterzuregeln, um dies zu vermeiden. Zu diesem Zweck ist die Recheneinheit 16 mit Stängeldickesensoren an der Pflückvorrichtung 1 verbunden.

Fig. 2 zeigt in einer Draufsicht auf einen Ausschnitt der Pflückvorrichtung 1 zwei alternative Varianten eines dieser Stängeldickesensoren, mit 17a bzw. 17b bezeichnet.

Der Stängeldickesensor 17a umfasst zwei zueinander spiegelbliche Baueinheiten, die einander beiderseits des Kanals 7 in Höhe des hinteren Endes der Führungshauben 5 gegenüberliegen. Eine dieser Baueinheiten ist in Fig. 3 in einer detaillierten Ansicht gezeigt. Jede Baueinheit umfasst einen Tastbügel 18. Wenn die Tastbügel 18 nicht durch einen zwischen ihnen hindurchtretenden Stängel 8 auseinandergedrückt werden, liegen sie federbelastet aneinander an, oder sie sind durch einen justierbaren Anschlag 24 daran gehindert, einander zu berühren. Die Tastbügel 18 sind jeweils um einen Angelpunkt 19 schwenkbar, der in Fahrtrichtung FR vor einem Berührungspunkt oder Punkt maximaler Annäherung 20 der Tastbügel 18 liegt, so dass die Bewegung, die die Eingangsbereich des Tastbügel 18 beim Durchgang eines Stängels 8 vollführen, eine Bewegung in Wesentlichen quer zur Fahrtrichtung FR ist. Zum Messen einer Auslenkung des Tastbügels 18 kann ein Potentiometer oder Drehwinkelgeber 21 an dem Angelpunkt 19 vorgesehen sein.

Eine stromaufwärtige Flanke 22 der Tastbügel 18, vor dem Berührungspunkt, verläuft schräg zur Fahrtrichtung, so dass ein Stängel 8, der sich entlang des Kanals 7 bewegt - sei es, weil er noch im Boden verwurzelt ist und der Mähdrescher 2 relativ zu ihm vorrückt, oder weil er, bereits abgeschnitten, von den Fingern der Förderkette angetrieben wird - den Tastbügel 18 leicht beiseite drücken kann. Die addierte Auslenkung beider Tastbügel 18 entspricht der Dicke des Stängels, es genügt also, dass die Recheneinheit 16 die Ergebnisse beider Drehwinkelgeber 21 addiert, um die Dicke des Stängels 8 zu ermitteln und darauf gestützt anhand eines empirisch ermittelten Zusammenhangs die Menge der daran hängenden Früchte abzuschätzen.

Der Stängeldickesensor 17b unterscheidet sich vom Stängeldickesensor 17a nur durch seinen Einbauort. Er ist am Kanal 7 in Förderrichtung überlappend mit den Pflückplatten 12 und Pflückwalzen 13 angeordnet. In der Vertikalen befinden sich die Tastbügel 18 unterhalb der Pflückplatten 12 und oberhalb der Pflückwalzen 13. Da die Pflückwalzen 13 sich in der Fahrtrichtung bis vor die Tastbügel 18 erstrecken, kommen sie mit jeden Stängel 8 früher in Kontakt als die Tastbügel 18 und beginnen damit, den Stängel 8 durch den Pflückspalt 9 nach unten zu ziehen. Die gemessene Stängeldicke kann daher beim Stängeldickesensor 17b systematisch niedriger ausfallen als bei einem in gleicher Höhe montierten Sensor 17a, dieser Effekt kann aber durch Verwendung eines entsprechend angepassten empirischen Zusammenhangs bei der Abschätzung der Fruchtmenge kompensiert werden. Die Einwirkung der Pflückwalzen 13 auf jeden Stängel 8 vor Erreichen der Tastbügel 18 stellt sicher, dass die Stängel in aufrechter Stellung den Sensor 17b passieren; eine Verfälschung der Messwerte durch eine Schrägstellung der Stängel 8 ist dadurch ausgeschlossen.

Die Zeitauflösung des Stängeldickesensors 17a oder 17b ist ausreichend, um den aus seinen Ausgangssignalen abgeleiteten Messwert der Stängeldicke zwischen zwei Durchgängen von Stängeln 8 zwischen den Tastbügel 18 ein Minimum durchlaufen zu lassen. Am Auftreten eines solchen Minimums erkennt die Recheneinheit 16, dass vorhergehende und nachfolgende Maxima auf verschiedene Stängel zurückzuführen sind; dies ermöglicht es ihm, auch die Zahl der in einer gegebenen Zeit durchlaufenden Stängel bzw. die auf diese entfallende Fruchtmenge, also den Massenstrom des Ernteguts, der alsbald am Dreschwerk des Mähdreschers eintreffen wird, zu berechnen.

Die Zeit, die das Erntegut eines Stängels nach dessen Erfassung durch den Stängeldickesensor 17a oder 17b benötigt, um das Dreschwerk zu erreichen, beträgt typischerweise mehrere Sekunden, und ist um so länger, je weiter der Stängeldickesensor 17a oder 17b von der Übergabeöffnung der Pflückvorrichtung 1 entfernt ist. Diese Zeit steht der Recheneinheit 16 zur Verfügung, um eine neue Sollgeschwindigkeit zu berechnen, mit der sich der Mähdrescher 2 vorwärtsbewegen muss, um den Massenstrom des Ernteguts am Dreschwerk konstant halten, und einen Fahrmotor des Mähdreschers 2 auf diese Sollgeschwindigkeit zu einzustellen.

Bezogen auf die in Fig. 1 gezeigte Situation bedeutet dies: solange der Mähdrescher 2 in dem Bereich mit dünnem Pflanzenbestand unterwegs ist, wählt die Recheneinheit 16 eine hohe Sollgeschwindigkeit v, um einen Massenstrom q aufrechtzuerhalten, der das Dreschwerk auslastet. Wenn er in einen Bereich mit kräftigem Pflanzenbestand übergeht, nimmt der Massenstrom an den entlang der Schneidkante der Pflückvorrichtung 1 verteilten Stängeldickesensoren 17a oder 17b um einen Faktor c zu; folglich setzt die Recheneinheit 16 die Sollgeschwindigkeit auf v/c herab, so dass, wenn der Mähdrescher diese Sollgeschwindigkeit erreicht hat, sich unter stationären Betriebsbedingungen derselbe Massenstrom q am Dreschwerk einstellt. Während der Mähdrescher auf die neue Sollgeschwindigkeit v/c verlangsamt, ist der Massenstrom an der Schneidkante der Pflückvorrichtung höher als q. Dieser Überschuss verteilt sich jedoch aufgrund der den Massenstrom egalisierenden Wirkung des Transports durch die Förderschnecke 14 auf eine lange Zeitspanne, so dass Spitzen des Massenstroms, die an der Schneidkante auftreten, das Dreschwerk in erheblich abgeschwächter Form erreichen. Diese Egalisierung ist umso stärker, je länger der Förderweg des Ernteguts in der Pflückvorrichtung 1 ist, deshalb ist die Erfindung besonders vorteilhaft anwendbar auf Pflückvorrichtungen großer Breite, insbesondere solche, deren Schneidkante in mehrere gegeneinander schwenkbare Segmente unterteilt ist.

Falls es unter ungünstigen Umständen doch zu einer Überfüllung der Pflückvorrichtung 1 und einer anschließenden Blockade des Dreschwerks kommt, ist die dann nötige Entlastung der Pflückvorrichtung 1 durch die Form der Tastbügel 18 erleichtert. Hinter dem Punkt maximaler Annäherung 20 weisen diese jeweils eine stromabwärtige Flanke 23 auf, entlang derer der Kanal 7 in der Durchlaufrichtung allmählich breiter wird. Der Winkel, den die stromabwärtige Flanke 23 mit der Durchlaufrichtung bildet, ist kleiner als 45° und insbesondere klein genug um zu gewährleisten, dass Stängel 8, die von den Fingern der entgegengesetzt zu ihrer normalen Förderrichtung angetriebenen Förderketten in der Fahrtrichtung FR aus dem Kanal 7 herausgeschoben werden, die Tastbügel 18 beiseite drücken, ohne an diesen festzuklemmen.

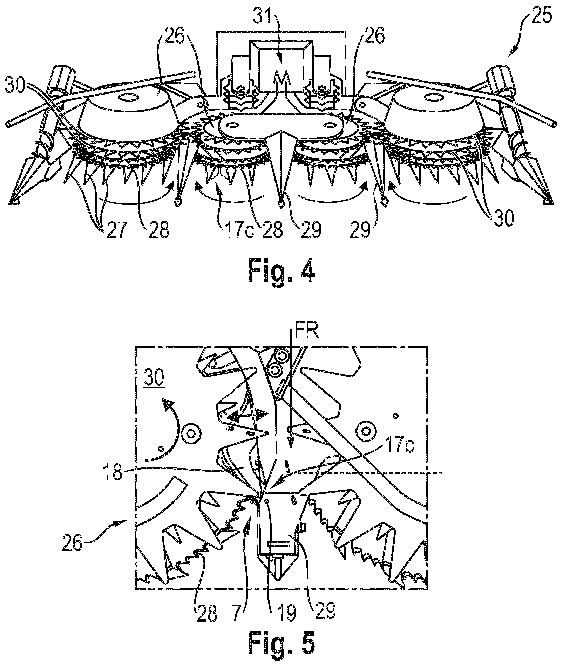

Fig. 4 zeigt in einer schematischen Ansicht von vorn ein Maisgebiss 25 eines Feldhäckslers als weiteres Beispiel eines Erntevorsatzes, an dem die Erfindung implementierbar ist. Über die Breite des Maisgebisses 25 sind mehrere jeweils in Pfeilrichtung drehangetriebene Transportscheiben 26 verteilt. Nach vorn vorspringende Einweisefinger 27 sind vorgesehen, um jeweils zwischen Reihen von Maispflanzen einzufahren und deren Stängel rotierenden Messern 28 an der Basis der Transportscheiben 26 zuzuführen. Die zwischen Zinken eines Zinkenrades 30 der Transportscheiben 26 aufgenommenen Stängel werden entlang des Umfangs der Transportscheiben 26 ins Innere des Maisgebisses 25 befördert und dort zur hier mit 31 bezeichneten mittigen Übergabeöffnung weitertransportiert. Ein Stängeldickesensor 17c umfasst wie mit Bezug auf Fig. 2 beschrieben zwei spiegelbildliche Baugruppen vom in Fig. 3 gezeigten Typ, die auf die zwei Seiten eines Spalts zwischen benachbarten Einweisefingern 27 verteilt sind. In Fig. 4 ist der Stängeldickesensor 17c nur an einem einzigen Spalt exemplarisch dargestellt; in der Praxis können alle Spalte oder zumindest mehrere über die breite des Maisgebisses 25 verteilte Spalte mit einem Stängeldickesensor 17c versehen sein.

Fig. 5 zeigt ein Detail eines alternativen Maisgebisses in einer Draufsicht. Komponenten 26-29 sind mit denen der Fig. 4 identisch. Als Stängeldickesensor 17d ist hier nur eine einzige Baugruppe vom in Fig. 3 gezeigten Typ vorgesehen. Sie ist an einer Abteilerspitze 29 zwischen zwei Transportscheiben 26 angebracht; ihr Tastbügel 18 steht unter der Abteilerspitze 29 seitlich in einen Kanal 7 vor, der einerseits von der Abteilerspitze 29 und andererseits von einer benachbarten Transportscheibe 26 begrenzt ist. Der Drehsinn der Transportscheibe 26 (hier im Gegenuhrzeigersinn) ist so gewählt, dass die von den Messern der Transportscheibe 26 geschnittenen Stängel dem Kanal 7 zugeführt und dort von dem Stängeldickesensor 17d erfasst werden. Diese Lösung ist besonders kostengünstig, da, um einen Stängeldickesensor 17d zu bilden, nur eine der Baugruppen der Fig. 3 benötigt wird, und dieser sämtliche von der Transportscheibe 26 geschnittenen Stängel vermisst.

### Bezugszeichen

- 1: Pflückvorrichtung
- 2: Mähdrescher
- 3: Erntegut
- 4: Spitze
- 5: Führungshaube
- 6: vorderer Abschnitt
- 7: Kanal
- 8: Stängel
- 9: hinterer Abschnitt / Pflückspalt
- 10: vordere Umlenkrolle
- 11: hintere Umlenkrolle
- 12: Pflückplatte
- 13: Pflückwalze
- 14: Förderschnecke
- 15: Einzugskanal
- 16: Recheneinheit
- 17a-d: Stängeldickesensor
- 18: Tastbügel
- 19: Angelpunkt
- 20: Punkt maximaler Annäherung
- 21: Drehwinkelgeber
- 22: stromaufwärtige Flanke
- 23: stromabwärtige Flanke
- 24: Anschlag
- 25: Maisgebiss
- 26: Transportscheibe
- 27: Einweisefinger
- 28: Übergabeöffnung
- 29: Abteilerspitze
- 30: Zinkenrad
- 31: Übergabeöffnung

## Patentansprüche

1. Fahrregler für eine selbstfahrende Erntemaschine (2) zum Verarbeiten von von einem abzuerntenden Feld aufgenommenem Erntegut, wobei eine Recheneinheit (16) des Fahrreglers eingerichtet ist, einen Sollwert der Fahrgeschwindigkeit (v) der Erntemaschine (2) anhand eines erwarteten Durchsatzes (q) an Erntegut vorzugeben, **dadurch gekennzeichnet, dass** die Recheneinheit (16) eingerichtet ist, den erwarteten Durchsatz anhand einer gemessenen Stängeldicke des Ernteguts abzuschätzen.

2. Fahrregler nach Anspruch 1, **gekennzeichnet durch** wenigstens einen Stängeldickesensor (17a-d), der zur Anbringung an einem Erntevorsatz (1, 25) der selbstfahrenden Erntemaschine ausgelegt ist.

3. Fahrregler nach Anspruch 2, bei dem der Stängeldickesensor (17a-d) wenigstens einen Tastbügel (18) umfasst, der einen von Stängeln (8) des Ernteguts durchlaufenen Kanal (7) auslenkbar begrenzt, wobei die Auslenkung des Tastbügels (18) durch einen den Kanal (7) durchlaufenden Stängel (8) repräsentativ für dessen Dicke ist.

4. Fahrregler nach Anspruch 3, bei dem der Kanal (7) auf einer Seite durch eine Transportscheibe (26), insbesondere durch wenigstens ein Zinkenrad (30) der Transportscheibe (26), begrenzt ist.

5. Fahrregler nach Anspruch 3, bei dem der Kanal (7) beiderseits durch Tastbügel (18) begrenzt ist.

6. Fahrregler nach einem der Ansprüche 3 bis 5, bei dem der wenigstens eine Tastbügel (18) eine in Bezug auf eine normale Durchlaufrichtung der Stängel (8) stromaufwärtige Flanke (22) aufweist, entlang derer der Kanal (7) in der Durchlaufrichtung allmählich enger wird, und entlang eines quer zum Kanal (7) verlaufenden Weges auslenkbar ist.

7. Fahrregler nach einem der Ansprüche 3 bis 6, bei dem der wenigstens eine Tastbügel (18) eine stromabwärtige Flanke (23) aufweist, entlang derer der Kanal (7) in der Durchlaufrichtung allmählich breiter wird, und die unter einem Winkel zur normalen Durchlaufrichtung verläuft, der klein genug ist, um eine Auslenkung des Tastbügels (18) durch einen entgegen der Durchlaufrichtung passierenden Stängel (8) zu ermöglichen.

8. Fahrregler nach einem der Ansprüche 3 bis 7, bei dem an dem Kanal (7) wenigstens ein Teil einer Pflückwalze (13) dem Stängeldickesensor (17b) bezogen auf die normale Durchlaufrichtung vorgelagert ist.

9. Fahrregler nach einem der Ansprüche 2 bis 8, bei dem der wenigstens eine Stängeldickesensor (17a-d) mehrere Stängeldickesensoren umfasst, die über die Breite des Erntevorsatzes (1, 25) verteilt angeordnet sind.

10. Fahrregler nach Anspruch 8, bei dem die Recheneinheit (16) eingerichtet ist, Ausgabesignale der mehreren Stängeldickesensoren (17a-d) gegeneinander zeitversetzt beim Abschätzen des Durchsatzes zu berücksichtigen.

11. Fahrregler nach einem der Ansprüche 2 bis 9, bei dem der Stängeldickesensor (17a-d) eingerichtet ist, ein zeitaufgelöstes Messsignal an die Recheneinheit (16) zu liefern, das es der Recheneinheit (16) erlaubt, eine Häufigkeit zu ermitteln, mit der Stängel den Stängeldickesensor (17a-d) passieren, und die Häufigkeit bei der Abschätzung des Durchsatzes zu berücksichtigen.

12. Erntemaschine (2) mit einem Fahrregler nach einem der vorhergehenden Ansprüche.

13. Computerlesbares Medium, auf dem Anweisungen gespeichert sind, die, wenn sie von einem Computer ausgeführt werden, den Computer veranlassen, als Recheneinheit eines Fahrreglers nach einem der Ansprüche 1-11 einen Sollwert der Fahrgeschwindigkeit (v) der Erntemaschine (2) anhand eines anhand einer gemessenen Stängeldicke des Ernteguts abgeschätzten erwarteten Durchsatzes (q) an Erntegut festzulegen.
